# FASCICULE DE BREVET EUROPEEN

(11) **EP 3 724 114 B1**
(45) Date de publication et mention de la délivrance du brevet: **15.11.2023**
(21) Numéro de dépôt: 18815244.1
(22) Date de dépôt: 14.12.2018
(51) Int. Cl.: B65H 57/12, B60C 9/00, D02G 3/12

(54) **GUIDE-FIL POUR LA FABRICATION D'ELEMENTS DE RENFORTS GAINÉS POUR PNEUMATIQUES**
DRAHTFÜHRUNG ZUR HERSTELLUNG VON UMMANTELTEN VERSTÄRKUNGSELEMENTEN FÜR REIFEN
WIRE GUIDE FOR PRODUCING SHEATHED REINFORCEMENT ELEMENTS FOR TYRES

(30) Priorité: 14.12.2017 FR 1762181
(43) Date de publication de la demande: 21.10.2020
(73) Titulaire: COMPAGNIE GENERALE DES ETABLISSEMENTS MICHELIN, 63000 Clermont-Ferrand (FR)
(72) Inventeur: LIMOZIN, Bastien, 63040 CLERMONT-FERRAND CEDEX 9 (FR); RIGO, Sébastien, 63040 CLERMONT-FERRAND CEDEX 9 (FR)
(74) Mandataire: Louret, Sylvain
(86) Numéro de dépôt international: PCT/EP2018/085001
(87) Numéro de publication internationale: WO 2019/115786

(56) Documents cités:
- WO-A1-2017/198559
- FR-A1- 2 400 399
- US-A- 3 240 233

## Description

### DOMAINE DE L'INVENTION

Le domaine de la présente invention est celui des guide-fils et des procédés mettant en oeuvre de tels guide-fils pour la fabrication d'éléments de renfort gainés pour pneumatiques.

La présente invention a pour objet un ensemble comprenant une pluralité de monofilaments métalliques et comprenant un bloc-guide-fil comprenant une pluralité de guide-fils, un procédé de centrage d'une pluralité de monofilaments métalliques à travers le bloc guide-fil, un procédé de fabrication d'une pluralité de monofilaments métalliques gainés, un procédé de fabrication d'un produit renforcé par extrusion comprenant les étapes d'un procédé de fabrication d'une pluralité de monofilaments métalliques gainés selon l'invention, et l'utilisation d'un bloc guide-fil pour le centrage d'une pluralité de monofilaments métalliques.

### ETAT DE LA TECHNIQUE

Pour la production d'éléments de renfort gainés pour pneumatiques à partir de monofilaments métalliques, les procédés de gainage connus, tels que décrits par exemple dans WO2015014776, comprennent une étape de guidage dans laquelle un monofilament métallique passe dans un guide fil ainsi qu'une étape de gainage dans laquelle le fil passe dans une filière d'extrusion de la gaine autour du monofilament métallique. Le document US 3 240 233 divulgue un ensemble comprenant un monofilament métallique et un guide-fil comprenant une portion de centrage configurée pour centrer un monofilament métallique selon un axe de centrage, dans lequel la portion de centrage est un cylindre droit dont les génératrices sont parallèles à l'axe de centrage et la courbe directrice est un polygone convexe. Le document WO 2017/198559 décrit un dispositif permettant l'extrusion d'une composition polymérique thermoplastique sous la forme d'un anneau autour d'un élément filaire comprenant une pluralité de filaments métalliques.

Lors du défilement d'un monofilament métallique dans un guide-fil, les forces de frottement exercées par le guide-fil sur la surface du monofilament métallique conduisent à une abrasion de la surface du monofilament métallique. Cette abrasion est d'autant plus marquée que la vitesse de défilement est élevée.

De plus, le monofilament métallique peut comprendre une âme, par exemple en acier, et une couche d'un revêtement métallique de plus faible dureté que l'âme. Le revêtement est donc particulièrement sensible à l'abrasion. Un tel revêtement a généralement pour fonctions d'agir comme lubrifiant pour le tréfilage du monofilament métallique, et comme précurseur de l'interface adhésive avec la matrice élastomérique de l'élément de renfort.

La matière arrachée par abrasion peut s'accumuler et finir par boucher le guide-fil, occasionnant la rupture du monofilament métallique.

En outre, chaque rupture nécessite d'interrompre la production des éléments de renfort gainés.

Pour optimiser la production, il est souhaitable de maintenir une vitesse de défilement la plus élevée possible tout en limitant le risque de rupture du monofilament métallique.

Un objectif de l'invention est de proposer un guide-fil permettant de limiter le risque de rupture du monofilament métallique.

### BREVE DESCRIPTION DE L'INVENTION

Pour ce faire est proposé un ensemble selon la revendication 1.

Avantageusement, un guide-fil de l'ensemble selon l'invention permet, grâce à la configuration particulière de la portion de centrage, de guider un monofilament métallique tout en prévenant le risque de bouchage du guide-fil par la matière arrachée par abrasion lors du défilement, donc tout en limitant le risque de rupture du monofilament métallique défilant dans le guide-fil.

Chaque guide-fil de l'ensemble selon l'invention peut également comprendre une ou plusieurs des caractéristiques suivantes, considérées individuellement ou selon toutes les combinaisons techniquement possibles :
- ledit cercle inscrit est centré sur l'axe de centrage ; et/ou
- r1 est supérieur ou égal à 0,02 mm, de préférence supérieur ou égal à 0,05 mm, plus préférentiellement supérieur ou égal à 0,12 mm et encore plus préférentiellement supérieur ou égal à 0,14 mm ; et/ou
- r1 est inférieur ou égal à 0,25 mm, de préférence inférieur ou égal à 0,23 mm et plus préférentiellement inférieur ou égal à 0,21 mm ; et/ou
- r2 est supérieur ou égal à 1,1^{∗}r1 ; et/ou
- r2 est inférieur ou égal à 1,15*r1 ; et/ou
- ladite courbe directrice est de symétrie de révolution autour de l'axe de centrage ; et/ou
- ladite courbe directrice est un polygone à moins de 10 segments ; et/ou
- ladite courbe directrice est un triangle, de préférence isocèle, plus préférentiellement équilatéral ; et/ou
- ladite courbe directrice est un quadrilatère, de préférence un losange, plus préférentiellement un carré ; et/ou
- la surface de la section de la portion de guidage est décroissante d'amont en aval de la portion de guidage ; et/ou
- la portion de guidage est de symétrie de révolution autour de l'axe de centrage ; et/ou
- une portion d'entrée communiquant directement avec la portion de guidage ; et/ou
- une portion d'entrée communiquant directement avec la portion de centrage ; et/ou
- un canal d'alimentation configuré pour acheminer une composition polymérique de gainage en sortie de la portion de centrage ; et/ou
- un premier et un deuxième canaux d'alimentation configurés pour acheminer la composition polymérique de gainage en sortie de la portion de centrage, le premier canal d'alimentation et le deuxième canal d'alimentation étant agencés de part et d'autre de la portion de centrage ; et/ou
- les axes de centrage des portions de centrage sont dans un même plan P et sensiblement parallèles entre eux.

Le bloc guide-fil de l'ensemble selon l'invention peut également comprendre une ou plusieurs des caractéristiques suivantes, considérées individuellement ou selon toutes les combinaisons techniquement possibles :
- les portions de centrage de chaque guide-fil sont identiques ; et/ou
- chaque guide-fil comprend un canal d'alimentation configuré pour acheminer une composition polymérique de gainage en sortie de la portion de centrage, et le canal d'alimentation de la composition polymérique est agencé de façon à revêtir collectivement la pluralité de monofilaments métalliques en sortie des portions de centrages; et/ou
- chaque guide-fil comprend un premier et un deuxième canaux d'alimentation configurés pour acheminer la composition polymérique de gainage en sortie de la portion de centrage, le premier canal d'alimentation et le deuxième canal d'alimentation étant agencés de part et d'autre de la portion de centrage, et au moins un des premier et deuxième canaux d'alimentation de la composition polymérique est agencé de façon à revêtir collectivement la pluralité de monofilaments métalliques en sortie des portions de centrage; et/ou
- chaque guide-fil comprend un premier et un deuxième canaux d'alimentation configurés pour acheminer la composition polymérique de gainage en sortie de la portion de centrage, le premier canal d'alimentation et le deuxième canal d'alimentation étant agencés de part et d'autre de la portion de centrage, et le premier et le deuxième canaux d'alimentation de la composition polymérique sont agencés de façon à revêtir collectivement la pluralité de monofilaments métalliques en sortie des portions de centrage; et/ou
- le premier canal d'alimentation est d'un côté du plan P et le deuxième canal d'alimentation d'une composition polymérique est de l'autre côté du plan P; et/ou
- chaque axe de centrage est situé à une distance supérieure ou égale à 2,1^{∗}r1 de chaque autre axe de centrage et chaque axe de centrage est situé à une distance inférieure ou égale à 2,5^{∗}r1 d'au moins un autre axe de centrage; et/ou
- le bloc guide-fil est monobloc; et/ou
- le bloc guide-fil est en matériau métallique, céramique ou composite.

L'invention se rapporte également à un procédé de centrage d'une pluralité de monofilaments métalliques comportant au moins :
- une étape de fourniture d'un ensemble tel que défini ci-dessus comprenant une pluralité de monofilaments métalliques de rayon r1 et un bloc guide-fil, et
- une étape de centrage de chaque monofilament métallique à travers chaque guide fil du bloc guide-fil de l'ensemble.

L'invention se rapporte également à un procédé de fabrication d'une pluralité de monofilaments métalliques gainés, comprenant un procédé de centrage tel que défini ci-dessus puis une étape de revêtement de chaque monofilament métallique de la pluralité de monofilaments métalliques par une composition polymérique. Dans un mode de réalisation préféré, l'étape de revêtement est une étape de revêtement collectif de la pluralité de monofilaments métalliques par la composition polymérique.

L'invention se rapporte également à un procédé de fabrication d'un produit renforcé par extrusion, comprenant les étapes d'un procédé de fabrication d'une pluralité de monofilaments métalliques gainés tel que défini ci-dessus, et comprenant, après l'étape de revêtement de chaque monofilament métallique par la composition polymérique, une étape de noyage de chaque monofilament métallique gainé dans une matrice d'élastomère.

L'invention se rapporte également à un procédé de fabrication d'un pneumatique comprenant les étapes d'un procédé de fabrication d'un produit renforcé par extrusion tel que défini ci-dessus.

L'invention se rapporte également à l'utilisation d'un bloc guide-fil pour le centrage d'une pluralité de monofilaments métalliques de rayon r1, le bloc guide fil comprenant une pluralité de guide-fils, chaque guide-fil comprenant une portion de centrage configurée pour centrer un des monofilaments métalliques selon un axe de centrage, dans lequel la portion de centrage est un cylindre droit dont les génératrices sont parallèles à l'axe de centrage et la courbe directrice est un polygone convexe ayant un cercle inscrit de rayon r2 supérieur ou égal à 1,05^{∗}r1 et inférieur ou égal à 1,2^{∗}r1.

### BREVE DESCRIPTION DES FIGURES

D'autres caractéristiques et avantages de la présente invention apparaitront à la lecture de la description et des figures suivantes :
- la figure 1 est une vue en perspective d'un guide-fil selon un premier mode de réalisation de l'invention,
- la figure 2 est une vue en perspective d'un guide-fil selon un deuxième mode de réalisation de l'invention,
- la figure 3 est une vue en section longitudinale d'un guide-fil selon un troisième mode de réalisation de l'invention,
- la figure 4 est une vue en section transversale d'un bloc guide-fil selon un mode de réalisation de l'invention,
- la figure 5 est une vue en section transversale d'un bloc guide-fil selon un autre mode de réalisation de l'invention,
- la figure 6 représente une étape d'un procédé de centrage d'un monofilament métallique selon l'invention,
- la figure 7 représente une étape d'un procédé de fabrication d'un monofilament métallique gainé selon l'invention,
- la figure 8 représente une étape d'un procédé de fabrication d'un produit renforcé par extrusion selon l'invention, et
- les figures 9 à 13 représentent des schémas en coupe longitudinale des guide-fils testés en exemple.

Il est à noter que ces dessins n'ont d'autre but que d'illustrer le texte de la description et ne constituent en aucune sorte une limitation de la portée de l'invention.

Sur les différentes figures, les éléments analogues sont désignés par des références identiques.

En outre, les différents modes de réalisation de l'invention sont compatibles entre eux.

### DESCRIPTION DETAILLEE DE L'INVENTION

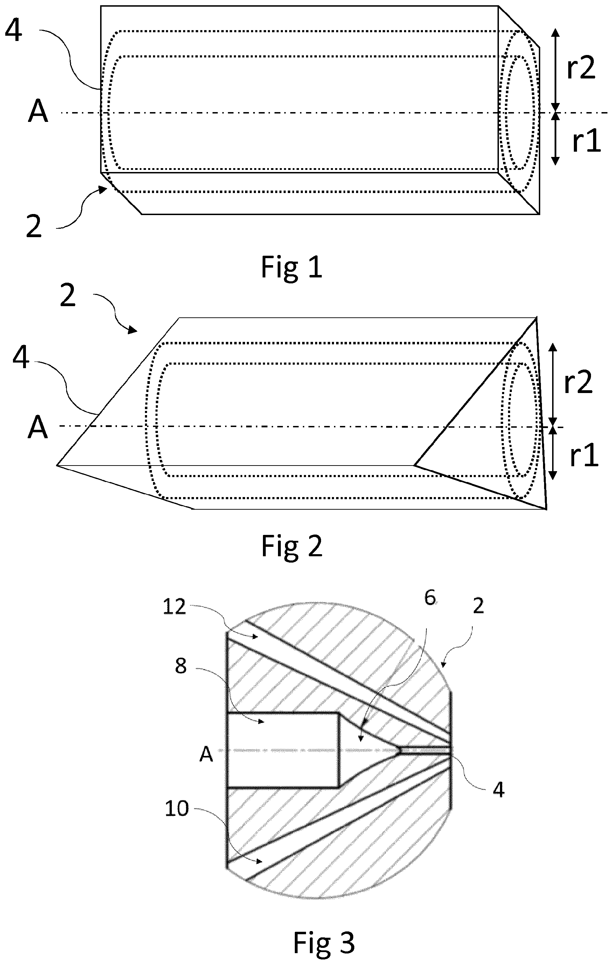

On a illustré sur la figure 1 un guide-fil 2 comprenant une portion de centrage 4 configurée pour centrer un monofilament métallique de rayon r1 selon un axe de centrage A.

La portion de centrage 4 est un cylindre droit dont les génératrices sont parallèles à l'axe de centrage A et dont la courbe directrice est un polygone convexe ayant un cercle inscrit de rayon r2 supérieur ou égal à 1,05^{∗}r1 et inférieur ou égal à 1,2^{∗}r1.

Par cylindre droit on entend une surface dans un espace tridimensionnel constituée de droites parallèles entre elles appelées génératrices, la surface présentant une intersection formée par une ligne fermée appelée courbe directrice avec tout plan perpendiculaire aux génératrices. Ainsi, un cylindre droit est un cylindre dont les génératrices sont perpendiculaires aux courbes directrices.

Par polygone on entend une figure géométrique plane formée d'une ligne brisée fermée, c'est-à-dire d'une suite cyclique de segments consécutifs. Un polygone convexe est simple, c'est à dire que deux côtés non consécutifs ne se rencontrent pas et deux côtés consécutifs n'ont en commun que l'un de leurs sommets. De plus, un polygone convexe a pour caractéristique que toutes ses diagonales sont entièrement dans son intérieur. Par diagonales, on entend les droites reliant deux à deux les sommets du polygone.

Par cercle inscrit à un polygone convexe on entend un cercle qui est tangent à tous les côtés du polygone convexe.

Avantageusement, la forme et les dimensions de la portion de centrage 4 assurent le guidage et limitent le risque de rupture du monofilament métallique.

De plus, la portion de centrage 4 peut accueillir une quantité importante de matière susceptible d'être détachée du monofilament métallique par abrasion au cours de son défilement. Au cours du défilement du monofilament métallique, la matière détachée peut être retenue le long des parois de la portion de centrage 4. Alternativement, du fait du défilement du monofilament métallique, la matière détachée peut être entraînée au moins en partie à l'extérieur de la portion de centrage 4. Dans les deux cas, la forme et les dimensions de la portion de centrage 4 du guide-fil 2 préviennent l'obturation de la portion de centrage 4 et la rupture du monofilament métallique.

En outre, la forme et les dimensions de la portion de centrage 4 préviennent l'accumulation dans la portion de centrage 4 d'un dépôt métallique issu du monofilament métallique lors de son défilement dans le guide-fil 2. Le passage du monofilament métallique est ainsi facilité.

Selon certains modes de réalisation de l'invention, la courbe directrice de la portion de centrage 4 est de symétrie de révolution autour de l'axe de centrage A. Le cercle inscrit de rayon r2 à la courbe directrice peut être centré sur l'axe de centrage A. Avantageusement, la précision et la stabilité du centrage sont améliorées.

Selon certains modes de réalisation de l'invention, la courbe directrice de la portion de centrage 4 est un polygone à moins de 10 segments. La courbe directrice peut être un quadrilatère, tel qu'illustré sur la figure 1, de préférence un losange, et plus préférentiellement un carré. Alternativement, la courbe directrice peut être un triangle, tel qu'illustré sur la figure 2, de préférence un triangle isocèle, et plus préférentiellement un triangle équilatéral.

Avantageusement, le risque de rupture du monofilament métallique est encore limité. Moins la courbe directrice de la portion de centrage comporte de segments, plus la surface enveloppée par la courbe directrice est grande par rapport au cercle inscrit de rayon r2, donc également par rapport à la section du monofilament métallique de rayon r1. Ainsi, le volume interne de la portion de centrage 4 disponible pour accueillir la matière arrachée du monofilament métallique au cours de son défilement est plus grand, et le risque de bouchage de la portion de centrage est réduit.

Selon certains modes de réalisation, la portion de centrage 4 du guide-fil 2 est configurée pour être traversée par un monofilament métallique de rayon r1 supérieur ou égal à 0,02 mm, de préférence supérieur ou égal à 0,05 mm, plus préférentiellement supérieur ou égal à 0,12 mm et encore plus préférentiellement supérieur ou égal à 0,14 mm.

Selon certains modes de réalisation, r1 est inférieur ou égal à 0,25 mm, de préférence inférieur ou égal à 0,23 mm et plus préférentiellement inférieur ou égal à 0,21 mm.

Le monofilament métallique comprend une âme en acier et une couche de revêtement métallique.

L'acier de l'âme est un acier au carbone comprenant entre 0,1% et 1,2% de carbone en masse, au plus 11% en masse de chrome, moins de 1% en masse de chacun des éléments suivants : manganèse, silicium, aluminium, bore, cobalt, cuivre, molybdène, nickel, niobium, titane, tungstène, vanadium, zirconium, phosphore, soufre, azote, le reste étant constitué de fer et d'impuretés inévitables résultant de l'élaboration. L'acier peut présenter une microstructure perlitique, ferritique, austénitique, bainitique, martensitique ou une microstructure issue d'un mélange de ces microstructures.

Le monofilament métallique présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant un renforcement amélioré de la matrice dans laquelle l'élément de renfort est destiné à être noyé et un allègement de la matrice ainsi renforcée, et ce d'autant plus que le grade de l'acier est élevé.

Le revêtement métallique comprend un métal choisi parmi le zinc, le cuivre, l'étain, le cobalt et les alliages de ces métaux. Comme exemples d'alliages de ces métaux, on citera le laiton et le bronze.

Selon certains modes de réalisation, le cercle inscrit à la courbe directrice de la portion de centrage 4 a un rayon r2 supérieur ou égal à 1,1^{∗}r1 et/ou inférieur ou égal à 1,15^{∗}r1.

Comme illustré en figure 3, le guide-fil 2 comprend une portion de guidage 6 configurée pour guider le monofilament métallique vers la portion de centrage 4. En d'autres termes, lors du défilement du monofilament métallique dans le guide-fil 2, celui-ci traverse d'abord la portion de guidage 6 puis la portion de centrage 4.

La surface d'une section de la portion de guidage 6 perpendiculaire à l'axe de défilement du monofilament métallique peut être décroissante d'amont en aval de la portion de guidage 6. En d'autres termes, la portion de guidage 6 converge dans le sens de défilement du monofilament métallique.

La portion de guidage 6 peut être de symétrie de révolution autour de l'axe de centrage A ou autour d'un axe parallèle à l'axe de centrage A.

La forme de la portion de guidage 6 comporte un premier tronc de cône et un deuxième tronc de cône de pentes différentes, une base du premier tronc de cône communiquant avec une base du deuxième tronc de cône ou peut être un entonnoir hyperbolique.

Ainsi, si l'on se réfère à une vue en coupe longitudinale du guide-fil 2 selon un plan contenant l'axe de centrage A tel qu'illustré sur la figure 3, la portion de guidage 6 est représentée par une ligne continue distante en tous points de l'axe de centrage A d'une distance supérieure ou égale à r2. Cette ligne continue peut comporter un segment incliné par rapport à l'axe de centrage A. Cette ligne continue peut également comporter une succession de segments inclinés par rapport à l'axe de centrage A et connectés entre eux selon un angle non nul. Cette ligne continue peut présenter, sur au moins une portion de celle-ci, un rayon de courbure non nul. Le guide-fil tel qu'illustré en vue en coupe longitudinale sur la figure 3 comporte une portion de guidage en forme d'entonnoir hyperbolique, c'est-à-dire représenté par une ligne continue ayant un rayon de courbure non nul.

Le guide-fil 2 peut également comprendre une portion d'entrée 8. La portion d'entrée 8, qui peut par exemple être cylindrique, est la portion du guide-fil 2 qui est traversée en premier par le monofilament métallique dans le sens de son défilement.

Si le guide-fil 2 comporte une portion de guidage 6, la portion d'entrée 8 peut communiquer directement avec la portion de guidage 6.

Si le guide-fil 2 ne comporte pas de portion de guidage 6, la portion d'entrée peut communiquer directement avec la portion de centrage 4.

Le guide-fil 2 peut comprendre au moins un canal d'alimentation 10 configuré pour acheminer une composition polymérique de gainage en sortie de la portion de centrage 4. Avantageusement, en sortie de la portion de centrage 4, le monofilament métallique est enrobé de la composition polymérique de gainage tout en étant centré par la portion de centrage 4 dans une position déterminée.

Le guide-fil 2 peut comprendre un premier et un deuxième canaux d'alimentation 10, 12 configurés pour acheminer une composition polymérique de gainage en sortie de la portion de centrage 4, le premier canal d'alimentation 10 et le deuxième canal d'alimentation 12 étant agencés de part et d'autre de la portion de centrage 4. Ainsi, le premier canal d'alimentation 10 traverse une première partie du guide-fil 2, le deuxième canal d'alimentation 12 traverse une deuxième partie du guide-fil 2, et la portion de centrage 4 traverse une partie intermédiaire du guide-fil 2, situé entre ladite première partie et ladite deuxième partie. Avantageusement, l'épaisseur de la gaine autour du monofilament métallique est mieux contrôlée.

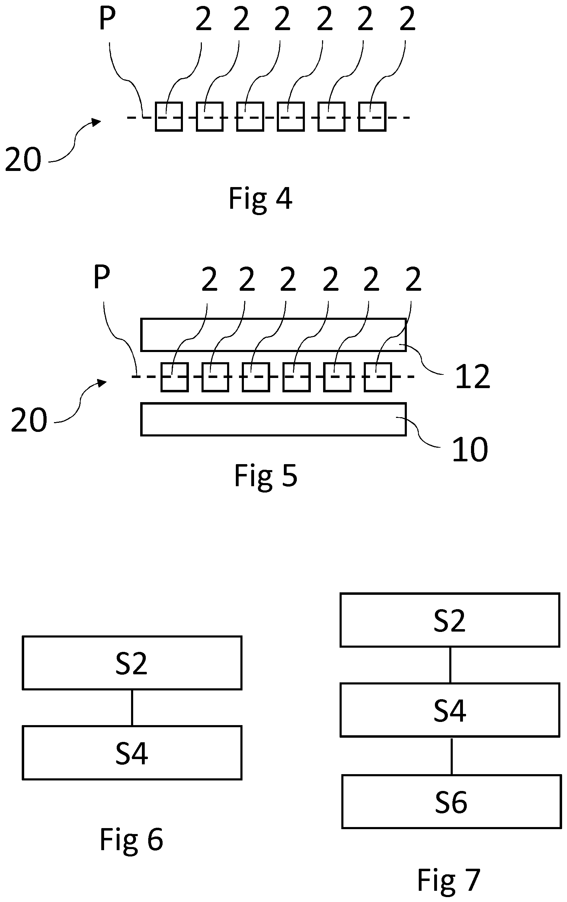

On a représenté sur la figure 4 un bloc guide-fil 20 comprenant une pluralité de guide-fils 2.

Chaque guide-fil 2 comprend une portion de centrage 4 configurée pour centrer un monofilament métallique de rayon r1 selon un axe de centrage A.

Les axes de centrage A des portions de centrage 4 sont dans un même plan P et sensiblement parallèles entre eux.

Ainsi, le bloc guide-fil 20 permet de centrer une pluralité de monofilaments métalliques de façon à les faire défiler dans un même plan P selon des axes de centrage A sensiblement parallèles, tout en limitant le risque de rupture de chaque monofilament métallique.

Le bloc guide-fil 20 peut être monobloc, en d'autres termes monolithique.

Le bloc guide-fil 20 peut être constitué d'un ou de plusieurs matériaux, tel qu'un matériau métallique, ou céramique ou composite. Le matériau en contact direct avec chaque monofilament métallique, en particulier le matériau constituant la portion de centrage 4 de chaque guide-fil 2 peut avoir des performances thermomécaniques, en particulier relatives à la dureté, supérieures à celles des matériaux constituant les monofilaments métalliques.

Avantageusement, un tel guide-fil 20 résiste à l'usure. Une telle usure peut occasionner un décentrage des monofilaments métalliques et imposer le remplacement du bloc guide-fil 20.

Les portions de centrage 4 de chaque guide-fil 2 peuvent être identiques par leur forme géométrique et/ou par leurs dimensions. Elles peuvent en outre être chacune espacées de la même distance.

Chaque guide-fil 2 du bloc guide-fil 20 peut comprendre un canal d'alimentation 10 configuré pour acheminer une composition polymérique de gainage en sortie de la portion de centrage 4. Le canal d'alimentation 10 d'une composition polymérique peut être agencé de façon à revêtir collectivement la pluralité de monofilaments métalliques en sortie des portions de centrage 4.

Chaque guide-fil 2 du bloc guide-fil 20 peut comprendre un premier et un deuxième canaux d'alimentation 10, 12 configurés pour acheminer la composition polymérique de gainage en sortie de la portion de centrage 4, le premier canal d'alimentation 10 et le deuxième canal d'alimentation 12 étant agencés de part et d'autre de la portion de centrage 4. Au moins un des premier et deuxième canaux d'alimentation 10, 12 d'une composition polymérique peut être agencé, tel qu'illustré sur la figure 5, de façon à revêtir collectivement la pluralité de monofilaments métalliques en sortie des portions de centrage 4.

Le premier canal d'alimentation peut être d'un côté du plan P et le deuxième canal d'alimentation d'une composition polymérique de l'autre côté du plan P. En d'autres termes, le premier canal d'alimentation 10 traverse une première partie du bloc guide-fil 20, le deuxième canal d'alimentation 12 traverse une deuxième partie du bloc guide-fil 20, et chaque portion de centrage 4 traverse une partie intermédiaire du bloc guide-fil 20, situé entre ladite première partie et ladite deuxième partie. Avantageusement, l'épaisseur de la gaine autour de chaque monofilament métallique est mieux contrôlée.

Selon certains modes de réalisation, l'axe de centrage A de chaque guide-fil 2 du bloc guide-fil 20 est situé à une distance supérieure ou égale à 2,1^{∗}r1 de l'axe de centrage A de chaque autre guide-fil 2 et inférieure ou égale à 2,5^{∗}r1 de l'axe de centrage A d'au moins un autre guide-fil. Selon un mode de réalisation, l'espacement entre les axes de centrage A de chaque guide-fil 2 du bloc guide-fil 20 est identique et sensiblement égal à 2,125^{∗}r1.

L'invention se rapporte à un ensemble comprenant un bloc guide-fil 20 et une pluralité de monofilaments métalliques de rayon r1 destinés à être centrés par le bloc guide-fil 20. Chaque monofilament métallique de rayon r1 est évidemment destiné à être centré au sein du bloc guide-fil 20 par un guide-fil 2 différent du guide-fil 2 destiné à centrer chaque autre monofilament métallique.

L'intérêt d'un tel ensemble est de permettre le guidage précis d'une pluralité de monofilaments métalliques dans le cadre d'un procédé de fabrication d'une bandelette composite comprenant une pluralité de monofilaments métalliques gainés collectivement par une composition polymérique. En effet, le positionnement de chacun des monofilaments métalliques dans la composition polymérique est contrôlé avec précision non seulement par rapport aux bords de la bandelette composite mais également par rapport aux autres monofilaments métalliques de la bandelette composite de façon à obtenir une bandelette composite aussi homogène et industriellement reproductible que possible.

L'invention se rapporte également à un procédé de centrage tel qu'illustré sur la figure 6 d'une pluralité de monofilaments métalliques.

Ce procédé comporte une étape de fourniture S2 d'une pluralité de monofilaments métalliques. Selon certains modes de réalisation, chaque monofilament métallique fourni au cours de l'étape de fourniture S2 est de rayon r1. Chaque monofilament métallique peut par exemple être initialement enroulé sous la forme d'une bobine. Au cours de l'étape de fourniture S2, chaque monofilament métallique peut par exemple être entraîné par un cabestan dans une direction déterminée et selon un sens de défilement déterminé.

Ce procédé comporte également une étape de centrage S4 de chaque monofilament métallique à travers un guide-fil 2. Au cours de l'étape de centrage S4, chaque monofilament métallique défile de façon à traverser le guide-fil 2, et en particulier la portion de centrage 4 du guide-fil 2.

Avantageusement, le procédé permet de centrer chaque monofilament métallique le long d'un axe de centrage A.

Selon l'invention, au cours de l'étape de centrage S4, une pluralité de monofilaments métalliques sont centrés à travers un bloc guide-fil. Chaque monofilament métallique est centré le long de l'axe de centrage A d'un guide-fil 2, les axes de centrage A étant dans un même plan P et sensiblement parallèles entre eux.

Avantageusement, plusieurs monofilaments métalliques sont centrés le long d'axes de centrage A situés dans un même plan P et sensiblement parallèles entre eux.

L'invention se rapporte également à un procédé de fabrication tel qu'illustré sur la figure 7 d'une pluralité de monofilaments métalliques gainés.

Ce procédé de fabrication comprend un procédé de centrage tel que décrit-ci dessus.

Ce procédé de fabrication comprend en outre une étape de revêtement S6 de chaque monofilament métallique par une composition polymérique. Chaque monofilament métallique est revêtu par la composition polymérique après avoir traversé la portion de centrage du guide-fil. La composition polymérique peut être acheminée jusqu'à chaque monofilament métallique par le biais d'un ou de plusieurs canaux d'alimentation.

Selon un mode de réalisation, au cours de l'étape de revêtement S6, la pluralité de monofilaments métalliques est collectivement revêtue par une composition polymérique. On obtient alors une bandelette composite comprenant la pluralité de monofilaments et la composition polymérique.

La composition polymérique est préférentiellement une composition polymérique thermoplastique. De préférence, la composition polymérique comprend un polymère thermoplastique. Dans une variante, le polymère thermoplastique est un polyamide aliphatique ou un copolyamide aliphatique, par exemple le nylon 6.6. Dans une variante, le polymère thermoplastique est un élastomère thermoplastique, de préférence insaturé, par exemple un élastomère styrénique thermoplastique insaturé. La composition polymérique peut comprendre tout ou partie des additifs habituellement utilisés dans les compositions utilisées dans le domaine du pneumatique. Des exemples de telles compositions polymériques thermoplastiques sont notamment décrits dans WO2010/136389, WO2010/105975, WO2011/012521, WO2011/051204, WO2012/016757, WO2012/038340, WO2012/038341, WO2012/069346, WO2012/104279, WO2012/104280 et WO2012/104281.

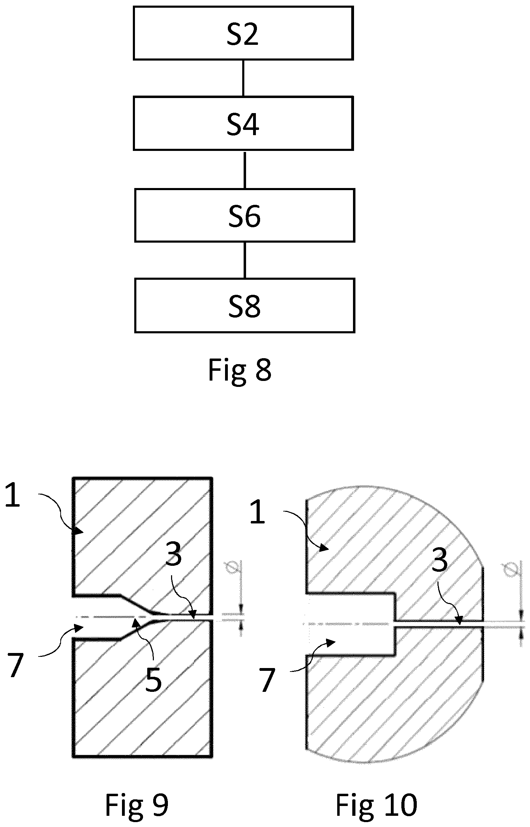

L'invention se rapporte également à un procédé de fabrication tel qu'illustré sur la figure 8 d'un produit renforcé par extrusion.

Ce procédé de fabrication comprend les étapes d'un procédé de fabrication de plusieurs monofilaments métalliques gainés.

Le procédé de fabrication comprend en outre une étape de noyage S8 de chaque monofilament métallique revêtu de la composition polymérique dans une matrice d'élastomère.

Considérons par exemple une nappe réalisée par un tel procédé, dans laquelle chaque monofilament métallique non gainé a un rayon voisin de 0,16 mm. Grâce à la précision de l'étape de centrage S4, la distance entre chaque monofilament métallique gainé et la surface libre de la nappe peut être finement contrôlée au cours de l'étape de noyage S8 et maintenue voisine de 0,09 mm. De plus, la distance entre deux monofilaments métalliques gainés voisins peut être finement contrôlée au cours de l'étape de revêtement S6 et maintenue voisine de 0,05 mm.

L'invention se rapporte également à un procédé de fabrication d'un pneumatique comprenant les étapes d'un procédé de fabrication d'un produit renforcé par extrusion tel que décrit ci-dessus.

L'invention se rapporte également à l'utilisation d'un bloc guide-fil tel que décrit ci-dessus pour le centrage d'une pluralité de monofilaments métalliques.

### EXEMPLES

Cinq guide-fils ont été réalisés et testés.

Un premier guide-fil 1 témoin, représenté sur la figure 9, comporte :
- une portion de centrage 3 cylindrique circulaire de diamètre 0,36 mm,
- une portion de guidage 5 dont la forme comporte un premier tronc de cône et un deuxième tronc de cône de pentes différentes, une base du premier tronc de cône communiquant avec une base du deuxième tronc de cône, et
- une portion d'entrée 7 cylindrique circulaire.

Un deuxième guide-fil 1, représenté sur la figure 10, comporte:
- une portion de centrage 3 cylindrique circulaire de diamètre 0,36 mm, et
- une portion d'entrée 7 cylindrique communiquant directement avec la portion de centrage, la portion d'entrée ayant un diamètre supérieur à la portion de centrage, formant ainsi un angle vif à l'interface entre la portion d'entrée et la portion de centrage.

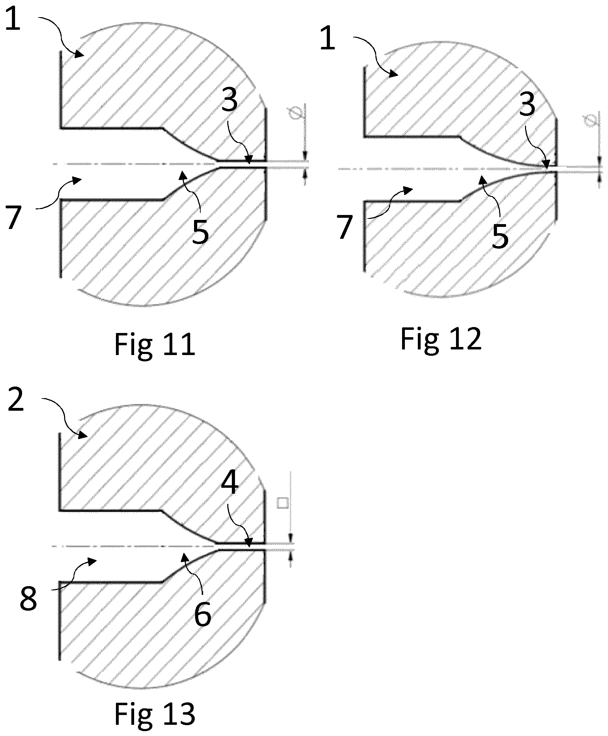

Un troisième guide-fil 1, représenté sur la figure 11, comporte :
- une portion de centrage 3 cylindrique circulaire de diamètre 0,36 mm,
- une portion de guidage 5 en forme d'entonnoir hyperbolique, et
- une portion d'entrée 7 cylindrique circulaire.

Un quatrième guide-fil 1, représenté sur la figure 12, comporte :
- une portion de centrage 3 cylindrique circulaire de diamètre 0,36 mm,
- une portion de guidage 5 en forme d'entonnoir hyperbolique, et
- une portion d'entrée 7 cylindrique circulaire.

Le rayon de courbure de la portion de guidage du quatrième guide-fil est plus grand que celui de la portion de guidage du troisième guide-fil.

Les portions de centrage des premier, deuxième, troisième et quatrième guide-fils 1 diffèrent des portions de centrage de la pluralité de guide-fils d'un ensemble selon l'invention.

Un cinquième guide-fil 2 dont la portion de centrage correspond à la portion de centrage d'un guide-fil d'un ensemble selon un mode de réalisation de l'invention, représenté sur la figure 13, comporte :
- une portion de centrage 4 cylindrique à base carrée de côté 0,36 mm, la courbe directrice étant un polygone convexe, ici un quadrilatère ayant un cercle inscrit de rayon 0,18 mm.
- une portion de guidage 6 en forme d'entonnoir hyperbolique, et
- une portion d'entrée 8 cylindrique circulaire.

Les cinq guide-fils ont été testés dans une filière d'extrusion-gainage. Chaque guide-fil a été traversé par un monofilament métallique de même rayon 0,16 mm. Chaque monofilament métallique a ensuite été entraîné, occasionnant son défilement à travers le guide-fil. Tous les tests ont été effectués à une vitesse de défilement sensiblement identique de 60 m.min⁻¹. En sortie de chaque guide-fil, le monofilament métallique centré est gainé. Tous les guide-fils testés ont permis un centrage efficace.

La longueur de monofilament métallique ayant défilé à travers chaque guide-fil a été mesurée avant rupture.

Parmi les guide-fils dont la portion de centrage est circulaire, aucun n'a permis d'éviter les ruptures de monofilament métallique.

Dans le cas des premier, deuxième et troisième guide-fils, la rupture du monofilament métallique a eu lieu après quelques dizaines à quelques centaines de mètres. Dans le cas du quatrième guide-fil, la rupture s'est effectuée après 4000 mètres.

Dans le cas du cinquième guide-fil, trois essais ont été effectués. La rupture du monofilament métallique a été évitée pour chacun des trois essais. Le défilement a été volontairement arrêté sans rupture après des distances variant selon les essais entre 3000 mètres et plus de 10000 mètres.

Les résultats démontrent l'efficacité des guide-fils d'un ensemble selon l'invention pour la prévention des ruptures de monofilaments métalliques tout en assurant la fonction de centrage.

L'invention a été décrite ci-dessus avec l'aide de modes de réalisation.

Bien d'autres modifications et variations se suggèrent d'elles même à l'homme du métier, après réflexion sur les différents modes de réalisation illustrés dans cette demande. Ces modes de réalisation sont donnés à titre d'exemple et ne sont pas destinés à limiter la portée de l'invention, qui est déterminée exclusivement par les revendications ci-dessous.

Dans les revendications, le mot « comprenant » n'exclut pas d'autres éléments ou étapes, et l'utilisation de l'article indéfini « un » ou « une » n'exclut pas une pluralité. Enfin, toute référence numérique utilisée dans les revendications ne doit pas être interprétée comme une limitation de la portée de l'invention.

## Revendications

1. Ensemble comprenant une pluralité de monofilaments métalliques de rayon r1 et un bloc guide-fil (20) comprenant une pluralité de guide-fils (2), chaque guide-fil (2) comprenant une portion de centrage (4) configurée pour centrer un monofilament métallique de rayon r1 selon un axe de centrage (A), dans lequel la portion de centrage (4) est un cylindre droit dont les génératrices sont parallèles à l'axe de centrage (A) et la courbe directrice est un polygone convexe ayant un cercle inscrit de rayon r2 supérieur ou égal à 1,05^{∗}r1 et inférieur ou égal à 1,2*r1, chaque guide-fil (2) comprenant une portion de guidage (6) configurée pour guider le monofilament métallique vers la portion de centrage (4), la forme de la portion de guidage (6) comportant un premier tronc de cône et un deuxième tronc de cône de pentes différentes, une base du premier tronc de cône communiquant avec une base du deuxième tronc de cône ou étant un entonnoir hyperbolique.

2. Ensemble selon la revendication précédente, dans lequel r2 est supérieur ou égal à 1,1^{∗}r1.

3. Ensemble selon l'une des revendications précédentes, dans lequel r2 est inférieur ou égal à 1,15^{∗}r1.

4. Ensemble selon l'une des revendications précédentes comprenant un canal d'alimentation (10) configuré pour acheminer une composition polymérique de gainage en sortie des portions de centrage (4).

5. Ensemble selon la revendication précédente, comprenant un premier (10) et un deuxième (12) canaux d'alimentation configurés pour acheminer la composition polymérique de gainage en sortie des portions de centrage (4), le premier canal (10) d'alimentation et le deuxième canal (12) d'alimentation étant agencés de part et d'autre des portions de centrage (4).

6. Ensemble selon l'une des revendications précédentes, dans lequel les axes de centrage (A) des portions de centrage (4) sont dans un même plan P et sensiblement parallèles entre eux.

7. Ensemble selon l'une des revendications précédentes, dans lequel les portions de centrage (A) de chaque guide-fil (2) sont identiques.

8. Ensemble selon l'une des revendications 6 ou 7,
- dans lequel chaque guide-fil (2) présente les caractéristiques de la revendication 4, et
- le canal d'alimentation (10) d'une composition polymérique est agencé de façon à revêtir collectivement la pluralité de monofilaments métalliques en sortie des portions de centrages (4).

9. Ensemble selon l'une des revendications 6 ou 7,
- dans lequel chaque guide-fil (2) présente les caractéristiques de la revendication 5, et
- le premier (10) et le deuxième (12) canaux d'alimentation de la composition polymérique sont agencés de façon à revêtir collectivement la pluralité de monofilaments métalliques en sortie des portions de centrages (4).

10. Ensemble selon l'une des revendications précédentes,
- dans lequel chaque axe de centrage (A) est situé à une distance supérieure ou égale à 2,1 *r 1 de chaque autre axe de centrage (A) et
- chaque axe de centrage (A)est situé à une distance inférieure ou égale à 2,5^{∗}r1 d'au moins un autre axe de centrage (A).

11. Procédé de centrage d'une pluralité de monofilaments métalliques comportant au moins :
- une étape de fourniture d'un ensemble selon l'une quelconque des revendications précédentes, comprenant une pluralité de monofilaments métalliques de rayon r1 et un bloc guide-fil (20), et
- une étape de centrage de chaque monofilament métallique à travers chaque guide-fil (2) du bloc guide-fil (20).

12. Procédé de fabrication d'une pluralité de monofilaments métalliques gainés, comprenant :
- un procédé de centrage d'une pluralité de monofilaments métalliques selon la revendication précédente,
- puis, une étape de revêtement de chaque monofilament métallique de la pluralité de monofilaments métalliques par une composition polymérique.

13. Procédé de fabrication selon la revendication précédente, dans lequel l'étape de revêtement est une étape de revêtement collectif de la pluralité de monofilaments métalliques par la composition polymérique.

14. Procédé de fabrication d'un produit renforcé par extrusion, comprenant les étapes d'un procédé de fabrication selon la revendication 12 ou 13, et comprenant, après l'étape de revêtement de chaque monofilament métallique par la composition polymérique, une étape de noyage de chaque monofilament métallique gainé dans une matrice d'élastomère.

15. Utilisation d'un bloc guide-fil (20) pour le centrage d'une pluralité de monofilaments métalliques de rayon r1, le bloc guide fil (20) comprenant une pluralité de guide-fils (2), chaque guide-fil (2) comprenant une portion de centrage (4) configurée pour centrer un des monofilaments métalliques selon un axe de centrage (A), dans lequel la portion de centrage (4) est un cylindre droit dont les génératrices sont parallèles à l'axe de centrage (A) et la courbe directrice est un polygone convexe ayant un cercle inscrit de rayon r2 supérieur ou égal à 1,05^{∗}r1 et inférieur ou égal à 1,2*r1, chaque guide-fil (2) comprenant une portion de guidage (6) configurée pour guider le monofilament métallique vers la portion de centrage (4), la forme de la portion de guidage (6) comportant un premier tronc de cône et un deuxième tronc de cône de pentes différentes, une base du premier tronc de cône communiquant avec une base du deuxième tronc de cône ou étant un entonnoir hyperbolique.

## Patentansprüche

1. Anordnung, umfassend eine Mehrzahl von metallischen Monofilamenten mit dem Radius r1 und einen Fadenführungsblock (20), umfassend eine Mehrzahl von Fadenführungen (2), wobei jede Fadenführung (2) einen Zentrierabschnitt (4) umfasst, der dazu ausgestaltet ist, ein metallisches Monofilament mit dem Radius r1 gemäß einer Zentrierachse (A) zu zentrieren,
wobei der Zentrierabschnitt (4) ein gerader Zylinder ist, dessen Mantellinien parallel zu der Zentrierachse (A) sind und dessen Leitkurve ein konvexes Polygon ist, das einen einbeschriebenen Kreis mit dem Radius r2 besitzt, der größer als oder gleich 1,05*r1 und kleiner als oder gleich 1,2*r1 ist, wobei jede Fadenführung (2) einen Führungsabschnitt (6) umfasst, der dazu ausgestaltet ist, das metallische Monofilament zu dem Zentrierabschnitt (4) hin zu führen, wobei die Form des Führungsabschnitts (6) einen ersten Kegelstumpf und einen zweiten Kegelstumpf mit unterschiedlichen Neigungen beinhaltet, wobei eine Basis des ersten Kegelstumpfs mit einer Basis des zweiten Kegelstumpfs kommuniziert oder ein hyperbolischer Trichter ist.

2. Anordnung nach dem vorhergehenden Anspruch, bei dem r2 größer als oder gleich 1,1*r1 ist.

3. Anordnung nach einem der vorhergehenden Ansprüche, bei dem r2 kleiner als oder gleich 1,15*r1 ist.

4. Anordnung nach einem der vorhergehenden Ansprüche, umfassend einen Zuführungskanal (10), der dazu ausgestaltet ist, eine Polymerzusammensetzung zur Ummantelung zum Auslass der Zentrierabschnitte (4) zu befördern.

5. Anordnung nach dem vorhergehenden Anspruch, umfassend einen ersten (10) und einen zweiten (12) Zuführungskanal, die dazu ausgestaltet sind, die Polymerzusammensetzung zur Ummantelung zum Auslass der Zentrierabschnitte (4) zu befördern, wobei der erste Zuführungskanal (10) und der zweite Zuführungskanal (12) beidseits der Zentrierabschnitte (4) angeordnet sind.

6. Anordnung nach einem der vorhergehenden Ansprüche, bei der die Zentrierachsen (A) der Zentrierabschnitte (4) in einer selben Ebene P liegen und im Wesentlichen parallel zueinander sind.

7. Anordnung nach einem der vorhergehenden Ansprüche, bei der die Zentrierabschnitte (A) jeder Fadenführung (2) identisch sind.

8. Anordnung nach einem der Ansprüche 6 oder 7,
- bei der jede Fadenführung (2) die Merkmale des Anspruchs 4 aufweist und
- der Zuführungskanal (10) einer Polymerzusammensetzung so angeordnet ist, dass er die Mehrzahl von metallischen Monofilamenten im Auslass der Zentrierabschnitte (4) gemeinsam umhüllt.

9. Anordnung nach einem der Ansprüche 6 oder 7,
- bei der jede Fadenführung (2) die Merkmale des Anspruchs 5 aufweist und
- der erste (10) und der zweite (12) Zuführungskanal der Polymerzusammensetzung so angeordnet sind, dass sie die Mehrzahl von metallischen Monofilamenten im Auslass der Zentrierabschnitte (4) gemeinsam umhüllen.

10. Anordnung nach einem der vorhergehenden Ansprüche,
- bei der jede Zentrierachse (A) in einem Abstand größer als oder gleich 2,1*r1 von jeder anderen Zentrierachse (A) liegt und
- jede Zentrierachse (A) in einem Abstand kleiner als oder gleich 2,5*r1 von mindestens einer anderen Zentrierachse (A) liegt.

11. Verfahren zum Zentrieren einer Mehrzahl von metallischen Monofilamenten, beinhaltend mindestens:
- einen Schritt des Bereitstellens einer Anordnung nach einem der vorhergehenden Ansprüche, umfassend eine Mehrzahl von metallischen Monofilamenten mit dem Radius r1 und einen Fadenführungsblock (20), und
- einen Schritt des Zentrierens jedes metallischen Monofilaments durch jede Fadenführung (2) des Fadenführungsblocks (20) hindurch.

12. Verfahren zur Herstellung einer Mehrzahl von ummantelten metallischen Monofilamenten, umfassend:
- ein Verfahren zum Zentrieren einer Mehrzahl von metallischen Monofilamenten nach dem vorhergehenden Anspruch,
- dann einen Schritt des Umhüllens jedes metallischen Monofilaments der Mehrzahl von metallischen Monofilamenten mit einer Polymerzusammensetzung.

13. Verfahren zur Herstellung nach dem vorhergehenden Anspruch, bei dem der Schritt des Umhüllens ein Schritt des gemeinsamen Umhüllens der Mehrzahl von metallischen Monofilamenten mit der Polymerzusammensetzung ist.

14. Verfahren zur Herstellung eines verstärkten Produkts durch Extrusion, umfassend die Schritte eines Verfahrens zur Herstellung nach Anspruch 12 oder 13 und umfassend, nach dem Schritt des Umhüllens jedes metallischen Monofilaments mit der Polymerzusammensetzung, einen Schritt des Einbettens jedes ummantelten metallischen Monofilaments in eine Elastomermatrix.

15. Verwenden eines Fadenführungsblocks (20) zum Zentrieren einer Mehrzahl von metallischen Monofilamenten mit dem Radius r1, wobei der Fadenführungsblock (20) eine Mehrzahl von Fadenführungen (2) umfasst, wobei jede Fadenführung (2) einen Zentrierabschnitt (4) umfasst, der dazu ausgestaltet ist, eines der metallischen Monofilamente gemäß einer Zentrierachse (A) zu zentrieren, wobei der Zentrierabschnitt (4) ein gerader Zylinder ist, dessen Mantellinien parallel zu der Zentrierachse (A) sind und dessen Leitkurve ein konvexes Polygon ist, das einen einbeschriebenen Kreis mit dem Radius r2 besitzt, der größer als oder gleich 1,05*r1 und kleiner als oder gleich 1,2*r1 ist, wobei jede Fadenführung (2) einen Führungsabschnitt (6) umfasst, der dazu ausgestaltet ist, das metallische Monofilament zu dem Zentrierabschnitt (4) hin zu führen, wobei die Form des Führungsabschnitts (6) einen ersten Kegelstumpf und einen zweiten Kegelstumpf mit unterschiedlichen Neigungen beinhaltet, wobei eine Basis des ersten Kegelstumpfs mit einer Basis des zweiten Kegelstumpfs kommuniziert oder ein hyperbolischer Trichter ist.

## Claims

1. Assembly comprising a plurality of metal monofilaments of radius r1 and a wire-guide block (20) comprising a plurality of wire guides (2), each wire guide (2) comprising a centring portion (4) configured to centre a metal monofilament of radius r1 along a centring axis (A),
in which the centring portion (4) is a right cylinder the generatrices of which are parallel to the centring axis (A) and the directrix of which is a convex polygon having an inscribed circle of radius r2 greater than or equal to 1.05^{∗}r1 and less than or equal to 1.2^{∗}r1, each wire guide (2) comprising a guiding portion (6) configured to guide the metal monofilament towards the centring portion (4), the shape of the guiding portion (6) comprising a first frustum and a second frustum with different gradients, a base of the first frustum communicating with a base of the second frustum, or can be a hyperbolic funnel.

2. Assembly according to the previous claim, in which r2 is greater than or equal to 1.1^{∗}r1.

3. Assembly according to one of the previous claims, in which r2 is less than or equal 1.15*rl.

4. Assembly according to one of the previous claims comprising a supply channel (10) configured to convey a polymeric sheathing composition to the outlet of the centring portions (4).

5. Assembly according to the previous claim, comprising a first (10) and a second (12) supply channel configured to convey the polymeric sheathing composition to the outlet of the centring portions (4), the first supply channel (10) and the second supply channel (12) being arranged on either side of the centring portions (4).

6. Assembly according to one of the previous claims, in which the centring axes (A) of the centring portions (4) are in the same plane P and substantially parallel to each other.

7. Assembly according to one of the previous claims, in which the centring portions (A) of each wire guide (2) are identical.

8. Assembly according to one of Claims 6 or 7,
- in which each wire guide (2) has the features of Claim 4, and
- the channel (10) for supplying a polymeric composition is arranged so that it coats the plurality of metal monofilaments collectively at the outlet of the centring portions (4).

9. Assembly according to one of Claims 6 or 7,
- in which each wire guide (2) has the features of Claim 5, and
- the first (10) and the second (12) channels for supplying the polymeric composition are arranged so that they coat the plurality of metal monofilaments collectively at the outlet of the centring portions (4).

10. Assembly according to one of the previous claims,
- in which each centring axis (A) is situated at a distance greater than or equal to 2.1^{∗}r1 from each other centring axis (A) and
- each centring axis (A) is situated at a distance less than or equal to 2.5^{∗}r1 from at least one other centring axis (A).

11. Method for centring a plurality of metal monofilaments including at least:
- a step of supplying an assembly according to any one of the previous claims, comprising a plurality of metal monofilaments of radius r1 and a wire-guide block (20), and
- a step of centring each metal monofilament through each wire guide (2) of the wire-guide block (20).

12. Method for producing a plurality of sheathed metal monofilaments, comprising:
- a method for centring a plurality of metal monofilaments according to the previous claim,
- then, a step of coating each metal monofilament of the plurality of metal monofilaments with a polymeric composition.

13. Production method according to the previous claim, in which the coating step is a step of collectively coating the plurality of metal monofilaments with the polymeric coating.

14. Method for producing a reinforced product by extrusion, comprising the steps of a production method according to Claim 12 or 13 and comprising, after the step of coating each metal monofilament with the polymeric composition, a step of embedding each sheathed metal monofilament in an elastomeric matrix.

15. Use of a wire-guide block (20) for centring a plurality of metal monofilaments of radius r1, the wire-guide block (20) comprising a plurality of wire guides (2), each wire guide (2) comprising a centring portion (4) configured to centre one of the metal monofilaments along a centring axis (A), in which the centring portion (4) is a right cylinder the generatrices of which are parallel to the centring axis (A) and the directrix of which is a convex polygon having an inscribed circle of radius r2 greater than or equal to 1.05^{∗}r1 and less than or equal to 1.2^{∗}r1, each wire guide (2) comprising a guiding portion (6) configured to guide the metal monofilament towards the centring portion (4), the shape of the guiding portion (6) comprising a first frustum and a second frustum with different gradients, a base of the first frustum communicating with a base of the second frustum, or can be a hyperbolic funnel.
